Europäisches Patentamt

European Patent Office

Office européen des brevets

(19)

(11) Veröffentlichungsnummer: **0 029 165 B2**

(12) **NEUE EUROPÄISCHE PATENTSCHRIFT**

(45) Veröffentlichungstag der neuen Patentschrift:
**16.05.90**

(51) Int. Cl.⁵: **C 08 B 30/16, B 01 F 3/12**

(21) Anmeldenummer: **80106782.8**

(22) Anmeldetag: **04.11.80**

(54) **Anlage zur kontinuierlichen Stärkemilch-Aufbereitung.**

(30) Priorität: **09.11.79 DE 2945361**

(43) Veröffentlichungstag der Anmeldung:
**27.05.81 Patentblatt 81/21**

(45) Bekanntmachung des Hinweises auf die
Patenterteilung:
**29.09.82 Patenblatt 82/39**

(45) Bekanntmachung des Hinweises auf die
Entscheidung über den Einspruch:
**16.05.90 Patentblatt 90/20**

(84) Benannte Vertragsstaaten:
**GB NL SE**

(56) Entgegenhaltungen:
CH-A- 365 706       US-A-3 338 560
DD-A- 66 777        US-A-3 423 238
DE-A-2 453 810      US-A-3 893 655
GB-A-1 230 033      US-A-4 141 656
US-A-3 298 669      US-A-4 367 953

DIE STARKE, Band 16, Nr. 11, 1964, H. GOOS:
"Entwicklung einer betriebsreifen Anlage zur
kontinuierlichen enzymatischen Konversion von
Stärke", Seiten 351-9

Die Akte enthält technische Angaben, die nach
dem Eingang der Anmeldung eingereicht
wurden und die nicht in dieser Patentschrift
enthalten sind.

(73) Patentinhaber: CPC INTERNATIONAL INC.
International Plaza P.O. Box 8000
Englewood Cliffs New Jersey 07632 (US)

(72) Erfinder: **Hinz, Gerhard**
**Zeppelinweg 12**
**D-4193 Kranenburg-Nütterden (DE)**
Erfinder: **Dinnessen, Josef**
**Kuhstrasse 52a**
**D-4193 Kranenburg-Frasselt (DE)**

(74) Vertreter: **Deufel, Paul, Dr. et al**
**Patentanwälte Müller-Boré, Deufel, Schön,**
**Hertel, Lewald, Otto Isartorplatz 6 Postfach 26**
**02 47**
**D-8000 München 26 (DE)**

EP 0 029 165 B2

**Beschreibung**

Die Erfindung betrifft eine Anlage zur kontinuierlichen Stärkemilchaufbereitung mit einer Dosiereinrichtung für die Stärkezufuhr, deren Ausgang in einen Einlauftrichter mündet, dessen Trichterinnenwand mittels Wasser aus einer Zuführleitung bespülbar ist.

Im Folgenden soll unter dem Begriff "Stärkemilch" ein Stärke-Wassergemisch, die auch als Slurry bezeichnet wird, verstanden werden.

In der Zeitschrift "Die Stärke" Nr. 11, 16. Jahrgang, wird auf den Seiten 351 und 352 ein Verfahren zum Herstellen einer homogenen Stärkemilch beschrieben. Dabei wurde die Suspension chargenweise angesetzt und ein quasikontinuierlicher Betrieb durch zwei Anschwemmbehälter ermöglicht. Die Behälter waren, um den Inhalt ständig in Bewegung zu halten, mit einem schnelllaufenden Propellerrührer ausgerüstet mit 1 bzw. 2 m³ Inhalt. Zur Dosierung lufttrockener Stärke wurden drehzahlgeregelte Schnecken verwendet. Auf den zitierten Seiten wird dargelegt, daß eine kontinuierliche Stärkemilchzubereitung erst für größere Kapazitäten interessant sei und daß deshalb das Problem der kontinuierlichen Stärkemilchzubereitung nicht weiterverfolgt wurde. Ferner wird die Stärke bei dieser bekannten Anlage ohne besondere Führung eindosiert, wobei der Flüssigkeitsstand über Schwimmerventile aufrechterhalten werden kann. Durch das Rührwerk wird allerdings die Oberfläche bewegt, so daß sich bei der Wasserdosierung nur ein Mittelwert einpendeln kann. Diese Systeme sind dann bei der Verwendung geringer Konzentrationen und großvolumiger Behälter ausreichend, lassen aber bei der Anwendung von Spezialstärken oder höheren Ansatzkonzentrationen sowie in einem etwaigen kontinuierlichen Betrieb, geringem Behältervolumen mit dementsprechend kleiner Pufferkapazität keine genügenden Genauigkeiten bzw. Konzentrationkonstanz zu.

Weiter ist in der DE-A-24 53 810 eine Anlage gemäß dem Oberbegriff des Anspruchs 1 beschrieben, und zwar die Dispersion von Pulvern, wie u.a. auch Stärke in einer Flüssigkeit, wie Wasser, die in einen bespülten Trichter eindosiert werden, dessen unteres Ende seitlich im Zentrum eines Turbinengehäuses mit horizontaler oder leicht gegen die Horizontale geneigter Achse mündet. Es soll eine Zerstäubung des Gemischs durch die Schaufeln der Turbine stattfinden. Diese bekannte Vorrichtung ist insbesondere zur Herstellung von Dispersionen bestimmter Lösungen in der Flüssigkeit leicht bzw. gut löslicher Pulvern bestimmt und geeignet.

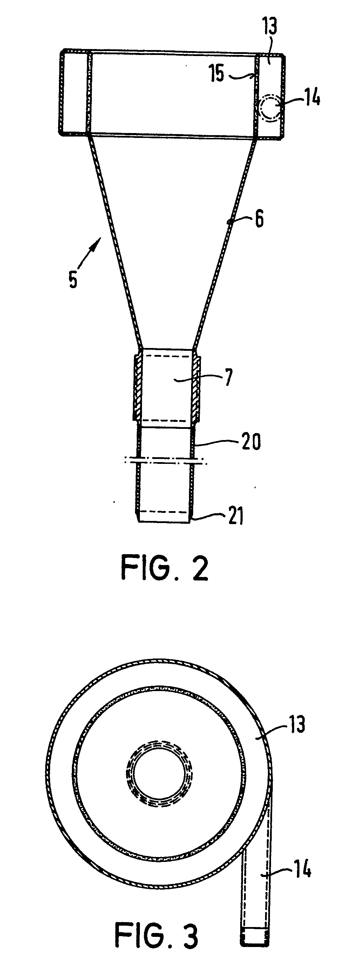

Gemäß der dortigen Figur 3 mündet das untere Ende des Aufnahmetrichters seitlich im Zentrum des Gehäuses einer Turbine: die Drehachse der Turbine verläuft entweder genau horizontal oder ist gegen die Horizontale um etwa 20° geneigt, um den bei der Bespülung entstandenen Flüssigkeitskanal leicht einführen zu können, welcher dann in der Turbine zerstäubt wird. Die etwas zurückgesetzte Anordnung des Siebs im Auslaufrohr der Turbine begünstigt die Homogenität der am Auslauf abgezogenen Dispersion. Als eine mögliche Anwendung dieser Vorrichtung wird die Dispersion von Stärke in Wasser genannt.

Gegenüber der DE-A-24 53 810 liegt der Erfindung die Aufgabe zugrunde, eine Alternative für die bestehende Vorrichtung zu schaffen, die bei geringem Energieaufwand kontinuierlich eine besonders konzentrationskonstante homogene Stärkemilch liefert, ohne daß Betriebsunterbrechungen aufgrund von Verklumpungen, Verstopfungen oder dergl. oder aufgrund mangelhafter kontinuierlicher Arbeitsweise in Kauf zu nehmen wären.

Gelöst wird diese Aufgabe erfindungsgemäß dadurch, daß eine Wassermischeinheit zum dosierbaren Einspeisen von Wasser in ein Fallrohr vorgesehen ist und daß der Auslauf des Einlauftrichters über das Fallrohr mit einem tiefer als der Auslauf liegenden Homogenisierungsgefäß verbunden ist, in dem eine Zwangsführung für das strömende Medium durch die Rührerzone über einen sich zur Rührerzone verjüngenden Konus angeordnet ist, wobei im Fallrohr eine Sogwirkung vom Auslauf des Einlauftrichters bis zum Ausgang im Homogenisierungsgefäß erzeugt wird.

Andererseits ist es noch bekannt (13. Kongreß F.E.F.C.O., Venedig, Mai 1974, Sonderdurck "ROQUETTE FRERES"), eine Anlage für die Leimbereitung zu erstellen, bei der Stärke und Wasser in eine konusartige Trichterausbildung mit Rührer, sog. Vormischer, eingespeist werden, der (die) in einem relativ großvolumigen Rührkessel angeordnet ist, der als Kocher für den Träger, sog. Primaire, dient, und in dem die Vermischung laufend in den darin befindlichen Träger (Stärkekleister) eingerührt und verkleistert wird, wobei aufgrund des im Rührkessel-Kocher ständig vorhandenen, im Verhältnis zur laufenden Zufuhr großen Träger-Stärkekleistervorrats kurzzeitige Abweichungen der Stärkezufuhr vom Sollwert nach oben und unten zu keinen allzugroßen Viskositätsschwankungen und — in der Folge — Betriebsstörungen führen, zumal dieser allerdings recht aufwendige Kochertyp diesbezüglich relativ unempfindlich ist.

Durch die Maßnahme nach der Erfindung wird die Aufgabe nicht nur voll gelöst: ein geringerer Energieaufwand für Rührer und Homogenisator sind erforderlich; trotz einem im Verhältnis zum Verbrauch geringen Stärkemilchpuffervolumen liefert die Anlage Stärkemilch mit hoher Konzentrationskonstanz, die ohne nennenswertes Risiko von Betriebsstörungen selbst gegen Stärkemilch-Konzentrationsschwankungen ziemlich empfindlicher Stärkemilch-Aufbereitungsapparaturen verwendet werden kann.

Stärkemilch kann in Konzentrationen hergestellt werden, wie sie in der Praxis verwendet werden. In vorteilhafter Weise wirken der Einlauftrichter und das Fallrohr zusammen, um sicher und kontinuierlich Stärke dem Homogenisierungsgefäss zuzuführen, in dem die endgültige Mischung oder Homogenisierung durchgeführt wird Dadurch, dass die Trichterwand mittels Wasser spülbar ist, entsteht ein an der Wandung anliegender Wasserfilter, der die anfallende Stärke, und insbesondere den anfallenden Stärkestoff, zum Auslauf spült. Das Fallrohr kann mit Vorteil so dimensioniert werden, dass sich am Auslauf des Einlauftrichters ein leichter Unterdruck einstellen kann, sobald durch Stärkeklumpen der Auslauf des Trichters zu verstopfen droht.

In vorteilhafter Weise kann eine Wassermischeinheit zum dosierbaren Einspeisen von Wasser in das Fallrohr vorgesehen sein. Diese Wassermischeinheit hat nicht die Aufgabe, das Stärke-Wassergemisch voll zu homogenisieren oder zu lösen, sondern es sollen hier nur die anteiligen Mengen von Wasser und Stärke zusammengebracht und grob vorgemischt werden.

Ein sehr zweckmässiger Aufbau der Anlage wird dadurch erzielt, dass zwischen dem Ausgang des Homogenisierungsgefässes und dem Verbraucher eine Pumpe eingeschaltet ist. Diese Pumpe, die gleichzeitig als Dosierpumpe ausgebildet sein kann, saugt die Stärkemilch aus dem Homogenisierungsgefäss und drückt sie zum jeweiligen Verbraucher. Dabei kann es vorteilhaft sein, dass die Pumpe eine drehzahleinstellbare Verdrängerpumpe ist und dass das Homogenisierungsgefäss direkt an oder auf der Pumpe montiert ist. Zweckmässigerweise sollte die Pumpe eine Pumpe mit möglichst gleichmässiger Förderung sein. Die Stärke-Slurry kann aus dem Homogenisator im Überschuss über den Verbraucher abgezogen werden, und der Überschuss kann im Kreislauf in den Homogenisator zurückgeführt werden.

Mit Vorteil kann die Dosiereinrichtung eine Dosierschnecke sein, deren Aufgabeende in Verbindung mit einem Vorratsbehälter für Stärke steht. Ferner kann deren Ausgang ein sich senkrecht nach unten erstreckendes Rohr sein, welches in den Einlauftrichter mündet. Der Durchmesser der Dosierschnecke ist dem gewünschten Fördermengenbereich angepasst. Die Beschickung des Vorratsbehälters kann mit Sackware vorgenommen werden oder von einer Siloanlage über eine Förderschnecke erfolgen. Bei dem Anschluss der Anlage an eine Siloanlage kann der Vorratsbehälter mit je einem Leer- oder Vollmelder zur Steuerung der Förderschnecke ausgerüstet sein. Es kann auf dem Behälterdeckel dann ein Luftfilter eingebaut sein.

Eine besonders günstige Zuführung der Stärke ergibt sich dadurch, dass sich der Ausgang senkrecht nach unten direkt in den Einlauftrichter hineinerstreckt.

Ein besonders vorteilhafter Aufbau des Einlasstrichters wird dadurch gegeben, dass dieser am oberen Ende einen Doppelmantel aufweist, in den die Wasserzufuhrleitung mündet und dessen Innenwand wasserdurchlässig ist. Auf diese Weise kann sehr einfach an der Trichterwandung der gewünschte Wasserfilm erzeugt werden, so dass verhindert wird, dass sich die Stärke an der Trichterwandung absetzen kann.

Die Innenwand des Doppelmantels kann beispielsweise aus Sintermetall oder aus porösem Kunststoff-, Keramik- oder Glasmaterial bestehen. Hierdurch wird ein sehr einfacher Aufbau ermöglicht. Die Innenwand des Doppelmantels kann aber auch aus einem mehrlagigen Siebgewebe aus korrosionsbeständigem, verschleissfestem Material, wie Kunststoff oder Edelstahl, bestehen. Auf diese Weise könnte die Höhe des Doppelmantels verringert werden. Bei dieser Ausführungsform sollte zweckmässigerweise die Innenfläche des Siebgewebes abgestützt sein, um ein Durchdrükken des Siebgewebes nach innen zu vermeiden.

Eine besonders günstige Wirkungsweise des Einlauftrichters ergibt sich dann, wenn die Wasserzufuhrleitung tangential zur Trichterinnenwand in den Einlauftrichter einmündet, so dass der Wasserfilm eine Drehbewegung im Trichter durchführen kann.

Am oberen Ende des Einlauftrichters können auch mit einer Wasserzufuhrleitung verbundene Düsen oder düsenförmige Rohre zur Berieselung der Trichterinnenwand vorgesehen sein. Diese Düsen können mit einer Ringleitung verbunden und an dieser auf einem Teilkreis gleichmässig verteilt sein. Bei dieser Ausführungsform ist ein Doppelmantel nicht erforderlich, und die Düsen oder düsenförmig ausgebildeten Rohrstücke können senkrecht angeordnet sein oder sich schräg nach aussen erstrecken.

Die Wassermischeinheit, die stromab vom Einlauftrichter im Fallrohr angeordnet ist, kann mit besonderem Vorteil so ausgelegt sein, dass sie nach dem Prinzip der Wasserstrahlpumpe arbeitet. Mit dieser Wassermischeinheit kann eine leichte Sogwirkung im Auslauf des Einlauftrichters erreicht werden. Dadurch wird eine bessere Abführung der in den Einlauftrichter dosiert abgegebenen Stärke ermöglicht.

Ein besonders einfacher Aufbau der Wassermischeinheit wird dadurch erreicht, dass der Auslauf des Einlauftrichters einen Ansatz aufweist, dessen unterer Rand abgeschrägt ist und der sich in eine im Fallrohr ausgebildete Ringkammer hineinerstreckt, in die eine Wasserzufuhrleitung mündet, und dass der abgeschrägte untere Rand des Ansatzes mit einer abgeschrägten Ringwand des Fallrohres einen Ringspalt bildet.

Ein weiterer einfacher Aufbau dieser Wassermischeinheit kann auch in der Weise erzielt werden, dass der Auslauf des Einlauftrichters einen Ansatz aufweist, der sich in eineim Fallrohr ausgebildete Ringkammer hineinerstreckt, in die eine Wasserzufuhrleitung mündet, und dass dieser Ansatz Bohrungen aufweist, welche die Ringkammer mit dem Fallrohr verbinden. Bei dieser Ausführungsform ist kein Spalt vorgesehen, sondern das Wasser wird über Bohrungen in das Fallrohr eingegeben.

Mit besonderem Vorteil wird die zum Trichter geführte Menge des Wassers konstant gehalten, während der verbleibende Anteil, der in Abhängigkeit vom Gesamtbedarf veränderlich ist, zum Fallrohr geführt werden soll.

Mit besonderem Vorteil kann dabei im Homogenisierungsgefäss zwischen dem Einlauf und einem Rührer ein beidseitig offener Konus angeordnet sein, dessen Rand grösseren Durchmessers gegen die Innenwand des Homogenisierungsgefässes stromab vom Einlauf anliegt, und dessen kleine Öffnung stromab vom Rand grösseren Durchmessers liegt. Dabei kann sich eine Rührwelle durch diese kleine Öffnung hindurcherstrecken und den Rührer stromab von oder in dieser kleinen Öffnung tragen. Der Konus führt das zu homogenisierende Stärke-Wassergemisch unmittelbar in den Rührer hinein, wobei dieser Rührer als propeller, Lattenrührer ausgebildet sein kann. Es können aber auch Zahnscheiben verwendet werden oder ein Blattrührer und Turbinenräder. Ferner kann ein Gitterrührer vorgesehen sein, oder es können gewellte Scheiben verwendet werden. Es kann auch eine ausreichende Homogenisierung mit glatten Scheiben oder Zylindern oder sogar mit der Rührerwelle allein erreicht werden.

Um eine gezieltere Führung des Mediums bei höheren Feststoffanteilen zu erreichen, kann sich von der kleineren Öffnung aus ein Rohransatz erstrecken, und der Rührer kann stromab von diesem Rohransatz oder in diesem angeordnet sein. Dabei kann die Länge des Rohransatzes etwa gleich dem Durchmesser der kleineren Konusöffnung sein.

Die Zwangsführung kann aber auch mit Vorteil ein Doppelkonus mit Zwischenrohr sein, dessen Ränder grösseren Durchmessers an der Innenwandung des Homogenisierungsgefässes anliegen und Einström- und Ausströmöffnungen der Zwangsführung bilden. Der Rührer kann im sich erweiternden Abschnitt des stromab gelegenen Konus oder im Zwischenrohr angeordnet sein. Es wird eine gezielte Führung bei höheren Feststoffanteilen ermöglicht, wobei eine erwünschte Umwälzung im unteren Behälterraumer folgt, und dies ist beim Zusatz von Homogenisierungsoder Lösungsmitteln von Bedeutung. Auch bei dieser Ausführungsform kann das Zwischenrohr eine Länge haben, die etwa gleich dem Durchmesser der kleineren Konusöffnungen ist.

Die Zwangsführung kann aber auch ein Rohrmantel sein, der mit der Innenwand des Homogenisierungsgefässes einen Ringspalt bildet und in dessen Inneren ein Doppelkonus mit Zwischenrohr angeordnet ist, dessen Ränder grösseren Durchmessers mit den Rohrmanträndern verbunden sind. Der Rührer kann im Zwischenrohr oder in einem Konus angeordnet sein. Auch hierbei kann die Länge des Zwischenrohres etwa gleich dem Durchmesser der kleineren Konusöffnungen sein. Das Rührwerk befindet sich vorzugsweise im engsten Querschnitt, und es wird ein Ringspalt mit der Behälterwandung gebildet. Dadurch wird eine bessere Umwälzung erzielt, und es sind höhere Umwälzleistungen möglich Diese Ausführung kann insbesondere bei hohen Feststoffkonzentrationen und schwer homogenisierbaren bzw. lösbaren Medien bei hoher Umwälzleistung eingesetzt werden.

Bei allen diesen Ausführungsbeispielen können die Rührer, wie im Vorstehendendargelegt, ausgebildet sein.

Um eine geregelte Anlage zu ermöglichen, können die Dosiereinrichtung und die Pumpe je ein Regelgetriebe aufweisen, die mit einem Regler verbunden sind, der auf einen Istwert vom Verbraucher anspricht.

Mit besonderem Vorteil können in den Wasserzufuhrleitungen Kugelhähne angeordnet sein, so dass eine gezielte Verteilung der Wassermengeerfolgen kann. Um die Wasserdosierung zu steuern, kann in den Wasserzuführungsleitungen ein vom Niveautransmitter des Homogenisierungsgefässes gesteuertes Regelventil angeordnet sein.

Mit Vorteil lassen sich mit dieser Anlage Stärkemilch-Konzentrationen bis zu den höheren Konzentrationen von 25 bis 30% TS herstellen.

Kaltquellende Spezialstärken, die bei chargenweisem Betrieb teilweise mit warmem Wasser angesetzt werden müssen, sind mit kaltem Wasser bis zu einer Konzentration von ca. 4 bis 5% TS ansetzbar bzw. lösbar. Weiterhin wird der Platzbedarf ganz erheblich verringert, da zusätzliche Behälter und Rührwerk eingespart werden können.

Die normalen Anlagen bestehen aus einem Ansatz- bzw. Wiegebehälter, aus dem die vorbereitete Stärkemilch in einen Pufferbehälter gepumpt wird. Aus dem Pufferbehälter wird dann die Stärkemilch dem Verbraucher zugeführt. Durch die erfindungsgemässe kontinuierlich arbeitende Anlage wird praktisch der Ansatz-bzw. Wiegebehälter mit grossem Rührwerk gegen ein kleines Homugenisierungsgefäss mit kleinem Rührwerk ausgetauscht. Es soll eingespart werden der Pufferbehälter mit Rührwerk und die Pumpe zwischen Ansatz- bzw. Wiegebehälter und dem Pufferbehälter.

Ausführungsbeispiele der Erfindung sollen in der folgenden Beschreibung unter Bezugnahme auf die Figuren der Zeichnung erläutert werden. Es zeigen

Fig. 1 eine schematische Ansicht einer Anlage zukontinuierlichen Stärkemilchaufbereitung,

Fig. 2 eine Schnittansicht einer Ausführungsform des Einlauftrichters,

Fig. 3 eine Draufsicht auf den in Fig. 2 dargestellten Einlauftrichter,

Fig. 4 eine Schnittansicht einer weiteren Ausführungsform eines Einlauftrichters,

Fig. 5 und 6 schematische Ansichten weiterer Ausführungsformen des Einlauftrichters,

Fig. 7 und 8 Schnittansichten von Ausführungsformen der Wassermischeinheit und

Fig. 9 bis 12 Schnittansichten von Ausführungsformen des Homogenisierungsgefässes.

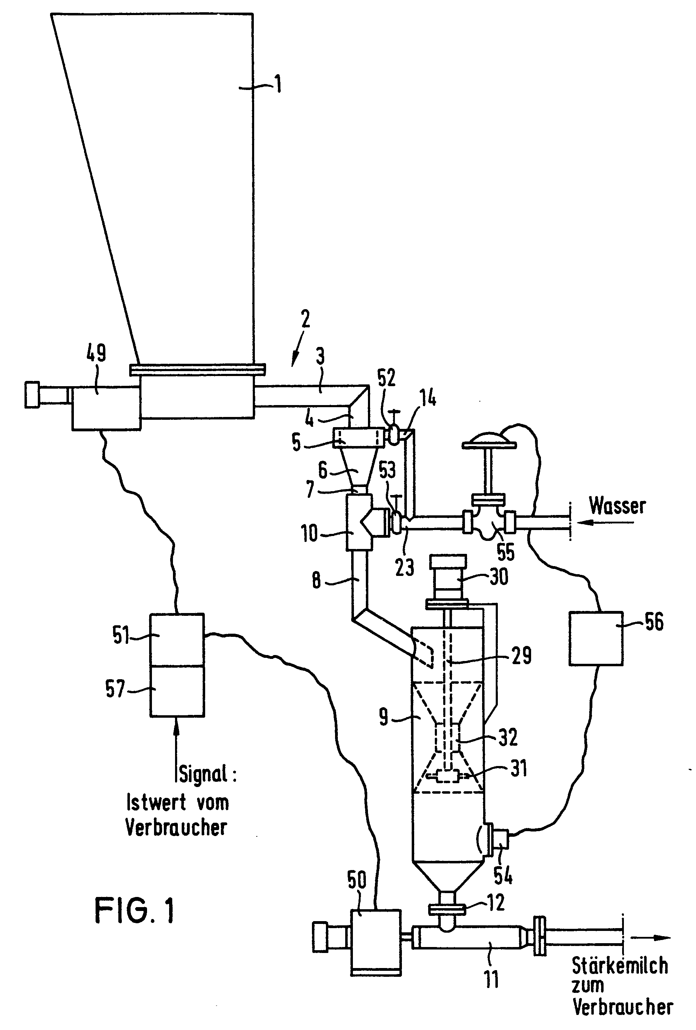

In Fig. 1 ist schematisch eine Anlage dargestellt, die einen Vorratsbehälter 1 für Stärke aufweist. Dieser Vorratsbehälter 1 für Stärke steht mit dem Aufgabeende einer Dosiereinrichtung 2 in Verbindung, die eine Förderschnecke 3 sein kann. Das Ausgabeende 4 der Förderschnecke 3 erstreckt sich senkrecht nach unten in einen Einlauftrichter 5, 6, der eine Wasseranschlussleitung 14 hat. In diesem Einlauftrichter wirde in Wasserfilm erzeugt, und dieser Wasserfilm führt die Stärke durch den Auslauf 7 des Einlauftrichters 5 in ein Fallrohr 8. In diesem Fallrohr 8 kann eine Wassermischeinheit 10 angeordnet sein, die über eine Leitung 23 mit Wasser gespeist wird. In dieser Mischeinheit kann die gegebenenfalls erforderliche restliche Wassermenge der bereits entstandenen Stärke-Wassermischung zugeführt werden. Das Fallrohr 8 mündet in ein Homogenisierungsgefäss 9, welches mit einem Rührwerk 29, 30, 31 ausgestattet ist. Der Ausgang 12 des Homogenisierungsgefässes 9 steht mit einer Pumpe 11 in Verbindung, die die hergestellte Stärkemilch zum Verbraucher pumpt.

Der Antrieb der Dosierschnecke 3 kann über ein Regelgetriebe 49 erfolgen. Die Änderung der Drehzahl kann durch Hand oder ein elektrisch oder pneumatisch angetriebenes Stellglied erfolgen.

Der Ausgang 4 der Dosierschnecke 3 ist ein oben geschlossenes, senkrecht nach unten sich ersteckendes Rohr. Die Verbindung mit dem nachgeschalteten Anlageteil erfolgt durch einen formmässig angepassten Kunststoffkörper. Hierdurch werden Massdifferenzen beim Aufbau der Anlage vermieden.

Eine Ausführungsform des Einlauftrichters ist in den Fig. 2 und 3 dargestellt. Der obere Teil des Einlauftrichters 5 weist einen Doppelmantel 13 auf. Dieser Doppelmantel 13 steht mit einer Wasserzufuhrleitung 14 in Verbindung. Wenn man die Innenwand 15 dieses Doppelmantels wasserdurchlässig macht, kann das Wasser durch diese Innenwand 15 hindurchtreten, und auf der Trichterinnenwand 6 kann sich ein Wasserfilm ausbilden, der sich abwärts bewegt, wobei die Abwärtsbewegung, wenn die Einführung des Wasserzufuhrrohres 14 tangential erfolgt, auch mit einer Drehbewegung verbunden sein kann. Durch diesen Aufbau wird vermieden, dass sich Stärke an der Trichterwandung absetzen kann. Insbesondere wird der Stärkestaub zum Auslass gespült.

Bei der in den Fig. 2 und 3 dargestellten Ausführungsform besteht die Innenwand 15 des Doppelmantels aus Sintermetall.

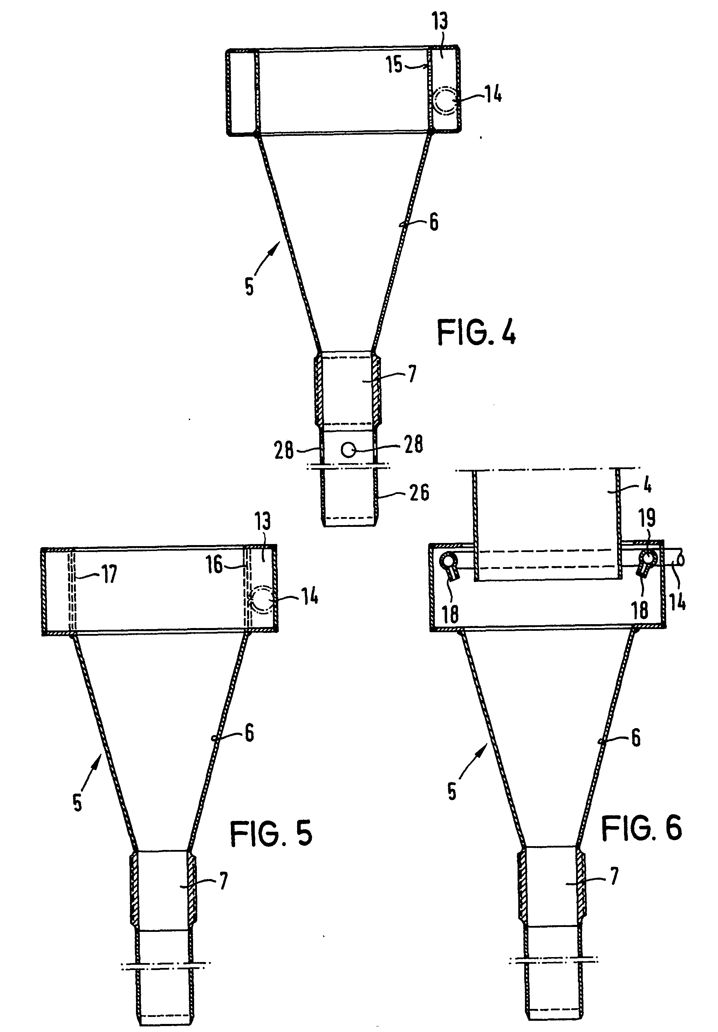

Wie die Fig. 5 zeigt, kann die Innenwand des Doppelmantels aus einem mehrlagigen Siebgewebe 16 aus Kunststoff oder Edelstahl bestehen. Auf diese Weise kann die Höhe des Doppelmantels verringert werden. Die Innenfläche 17 wird in ausreichender Weise abgestützt, um ein Durchdrücken des Siebgewebes nach innen zu vermeiden.

Der Einlauftrichter 5 kann, wie Fig. 6 zeigt, auch ohne Doppelmantel ausgebildet sein. Bei dieser Ausführungsform ist es lediglich erforderlich, im oberen Abschnitt des Trichters 5 Düsen anzuordnen, die senkrecht nach unten, nach innen oder nach aussen gerichtet sein können. Diese Düsen können an einer Ringleitung 19 angeordnet sein und zwar auf einem Teilkreis gleichmässig verteilt. Es hat sich beispielsweise als zweckmässig erwiesen, drei bis acht derartige Düsen vorzusehen Diese Düsen werden dann vom gemeinsamen Wasseranschluss 14 gespeist.

Ausführungsbeispiele des Aufbaus der Mischeinheit 10 sind in den Fig. 2, 4 und 7, 8 veranschaulicht.

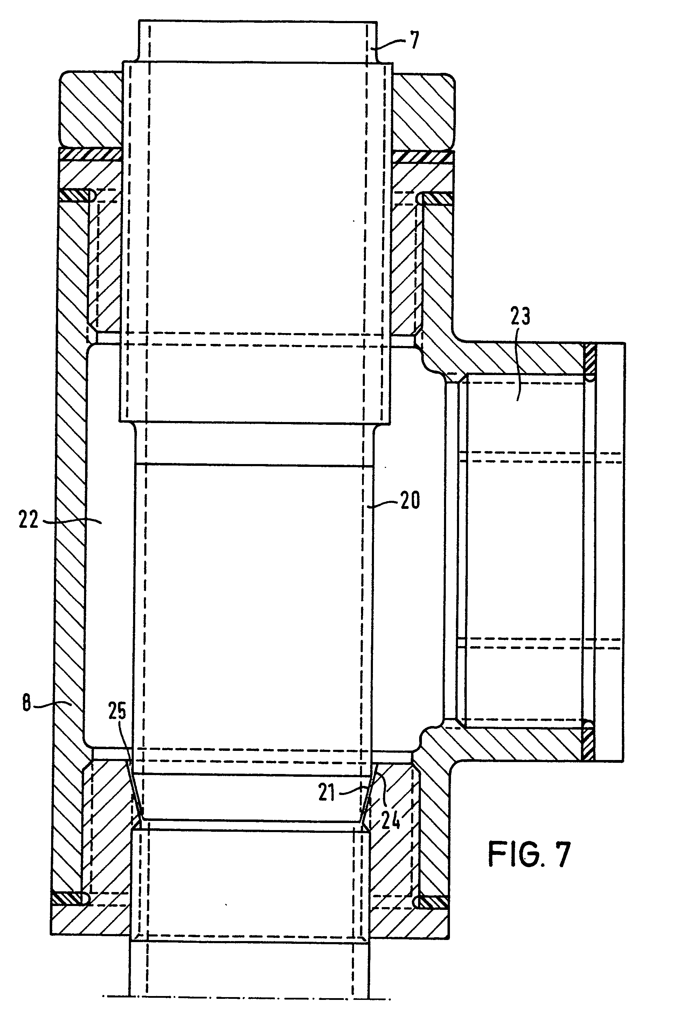

Wie die Fig. 2 und 7 zeigen, weist der Einlauftrichter 5 am Auslauf 7 einen rohrförmigen Ansatz 20 auf. Dieser rohrförmige Ansatz 20 erstreckt sich in das Fallrohr 8 hinein und bildet zusammen mit diesem Fallrohr 8 eine Ringkammer 22, welche mit der Wasserzufuhrleitung 23 in Verbindung steht. Am unteren Rand 21 ist der Ansatz 20 abgeschrägt, und das Fallrohr 8 weist eine Ringwand 24 auf, die in entsprechender Weise abgeschrägt ist, so dass zwischen diesen ein Ringspalt 25 ausgebildet wird. Bei Zufuhr von Wasser wird durch diese Ausbildung eine Saugwirkung nach Art einer Wasserstrahlpumpe erzeugt.

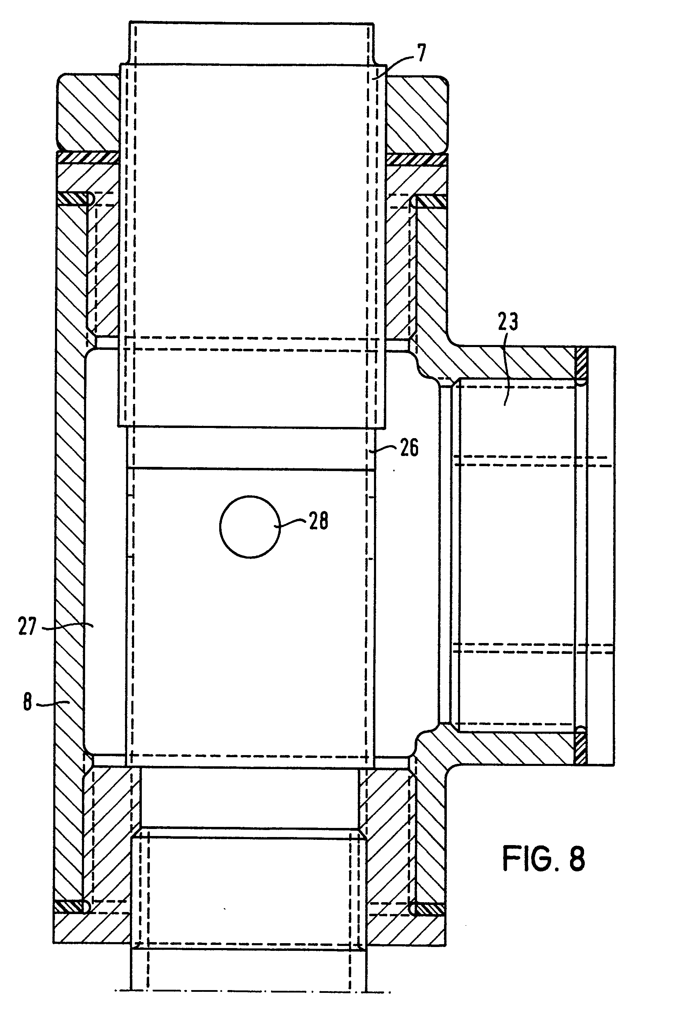

Die in den Fig 4 und 8 dargestellte Ausführungsform der Wassermischeinheit 10 weist keinen Ringspalt mehr auf. Der Ansatz 26 des Auslaufes 7 des Einlauftrichters 5 erstreckt sich wiederum in das Fallrohr 8 hinein und bildet mit diesem eine Ringkammer 27, die jedoch am unteren Ende geschlossen ist. Diese Ringkammer 27 steht mit der Wasserzufuhrleitung 23 in Verbindung. Im Ansatz 26 sind Bohrungen 28 vorgesehen, über die das Wasser dann aus der Ringkammer 27 in das Fallrohr 8 eintreten kann.

Im Fallrohr 8 wird eine Sogwirkung vom Auslauf 7 des Einlauftrichters 5 bis zum Ausgang 12 im Homogenisierungsgefäss 9 erzeugt. Die für das Fallrohr 8 erforderliche Länge kann in einfacher Weise durch Versuche ermittelt werden. Obwohl bei der erfindungsgemässen Anlage ein Homogenisierungsgefäss 9 ohne Zwangsführung 32 verwendet werden kann, hat es sich als vorteilhaft erwiesen, in dem Homogenisierungsgefäss 9 eine Zwangsführung vorzusehen.

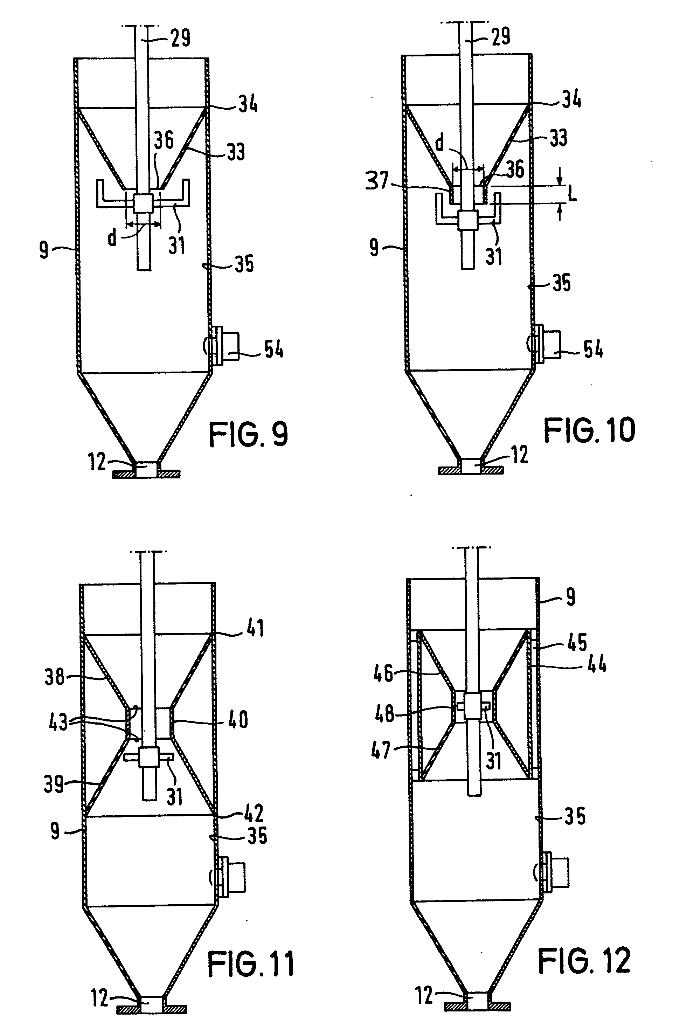

Wie die Fig. 9 zeigt, kann diese Zwangsführung in einfacher Weise ein nach unten sich verjüngender Konus 33 sein, dessen Rand 34 mit grösserem Durchmesser an der Innenwand 35 des Homogenisierungsgefässes 9 anliegt. Die Rührerwelle 29, die von einem Rührwerk 30 angetrieben wird, erstreckt sich durch dies tromab liegende kleine Öffnung 36 des Konus hindurch, und der Rührer 31 ist unterhalb dieser Öffnung 36 angeordnet. Es wird hierdurch eine Zwangsführung des durchströmenden Mediums durch die Rührwerkzone erzielt. Der Durchmesser d der kleinen Öffnung 36 ist an die Pumpensaugleistung bzw. an die Geschwindigkeit des Flüssigkeitsstromes angepasst und ermöglicht beispielsweise eine Strömungsgeschwindigkeit von 0,2 bis 1,0 m/s, und zwar in Abhängigkeit vom Medium.

Bei allen Ausführungsformen weist das Homogenisierungsgefäss 9 einen Niveautransmitter 54 auf.

Der Durchmesser d des Homogenisierungsgefässes 9 hängt praktisch nur von der Grösse der vorgeschalteten Dosierschnecke ab. Der Durchmesser sollte nicht kleiner als der Anschluss des Niveautransmitters sein. Es ergibt sich hierbei ein kleinster Durchmesser von etwa 100 mm. Bei Produkten, die sich nicht so schnell homogenisieren lassen bzw. lösen lassen, muss eine gewisse Verweilzeit vorgegeben werden, doch ist diese gegebenenfalls zum Ausgleich von Konzentrationsschwankungen erforderlich.

Bei der in Fig. 10 dargestellten Ausführungsform wird eine gezieltere Führung des Mediums für höhere Feststoffanteile ermöglicht. Bei dieser Ausführungsform ist am Ende des Konus 33 ein Rohransatz 37 vorgesehen, wobei die Länge L dieses Rohransatzes etwa gleich dem Durchmesser d der kleineren Öffnung 36 des Konus 33 ist.

Eine Ausführungsform für hohe Feststoffanteile mit gezielter Umwälzung im unteren Behälterraum ist in Fig. 11 dargestellt. Es ist ein Doppelkonus 38, 39 vorgesehen, und zwischen den Öffnungen 43 kleineren Durchmessers dieses Doppelkonus ist ein Zwischenrohr 40 angeordnet. Der Rührer 31 des Rührwerkes befindet sich im sich erweiternden Teil des stromab gelegenen Konus 39. Die Ränder 41, 42 der Konusse 38, 39 bilden Einström- und Ausströmöffnungen und liegen gegen die Innenwand 35 des Homogenisierungsgefässes 9 an. Diese Ausführungsform ist von Bedeutung, wenn eine Homogenisierungs- bzw. Lösungsunterstützung erforderlich ist.

Wie Fig. 12 zeigt, kann die Zwangsführung 32 einen Rohrmantel 44 aufweisen. Dieser Rohrmantel 44 bildet zusammen mit der Innenwand 35 des Homogenisierungsgefässes einen Spalt 45. Innerhalb des Rohrmantels 44 ist ein Doppelkonus 46, 47 angeordnet, der wiederum ein Zwischenrohr 48 aufweist. Das Rührwerk 31 befindet sich im engsten Querschnitt der Zwangsführung. Durch diese Ausführungsform wird eine bessere Umwälzung gewährleistet. Es sind auch höhere Umwälzleistungen möglich. Dies ist insbesondere bei hohen Feststoffkonzentrationen und schwer homogenisierbaren und lösbaren Medien von Bedeutung. Der Spalt 45 kann beispielsweise eine Breite von ca. 5 bis 10 mm haben.

Bei der in den Fig. 2 und 7 dargestellten Ausführungsform erfolgt die Wasserzuführung in zwei Teilströmen, und zwar über die Leitungen 14 und 23. Die Hauptwassermenge wird hier über die Leitung 23 zugeführt, während ein kleinerer Teil dem Doppelmantel 13 des Einlauftrichters 5 zugeführt wird. Dies ist der Normalfall.

Bei höheren Konzentrationen kann sich jedoch das Verhältnis verschieben, so dass der Wassermischeinheit 10 weniger Wasser zugeführt werden muss. Dann muss aber auch der Ringspalt 25 in der Wassermischeinheit 10 verkleinert werden. Weiterhin sollten dann beide Leitungen 14, 23 Kugelhähne 52 und 53 aufweisen. Hierdurch wird es möglich, die Verteilung gezielter einzustellen, da die Gegendrücke in dem Doppelmantel 13 des Einlauftrichters 5 und in der Wassermischeinheit 10 verschieden sind.

Es besteht auch die Möglichkeit, die Zuführungsleitung 14 mit Kugelhahn 52 zum Einlauftrichter 5 nicht nach dem Regelventil 55, sondern in die Wasserzuführungsleitung vor dem Regelventil 55 anzuschliessen. Dadurch kann das Regelventil 55 kleiner ausgelegt werden. Über die Leitung zum Doppelmantel 13 des Einlauftrichters 5 strömt dann ein konstanter Wasserstrom.

Hierzu muss jedoch die Anlage in eine weitere Anlage eingebaut sein, so dass die Möglichkeit besteht, über ein zusätzlich in die Wasserzuführungsleitung eingebautes Ventil, die Wasserzufuhr bei Maschinenstillstand abzustellen.

Auch bei der Ausführungsform des Einlauftrichters 5, die in Fig. 5 dargestellt ist und die Siebgewebe 16 aufweist, kann gegebenenfalls das gesamte Wasser dem Doppelmantel des Einlauftrichters 5 zugeführt werden. Dabei kann die Wassermischeinheit 10 entfallen. Das Fallrohr 8 müsste in diesem Fall evtl. verlängert werden. Eine derartige Ausbildung ist bei dem in Fig. 6 dargestellten Einlauftrichter 5 möglich.

Das Regelventil 55 wird von einem Regler 56 betätigt, der sein Istsignal vom Niveautransmitter 54 erhält, der an der Wand des Homogenisierungsgefässes 9 befestigt ist. Durch das Rührwerk des Homogenisierungsgefässes wird bei den verschiedenen Ausführungsformen der Zwangführung 32 die Niveaumessung zwar beeinflusst. Dies geht aber als Konstante in die Messung ein. Die Höhe des einstellbaren Niveaus richtet sich nach der Art des verwendeten Produktes bzw. der Stärketypen und kann zwischen der Oberkante der Einbauten und dem Eintritt in den engsten Querschnitt der Einbauten liegen. Der Arbeitspunkt wird durch die erste Einstellung der Anlage am Verwendungsort festgelegt.

Die dargestellte und beschriebene Anlage kann als geregelte Anlage arbeiten.

Von einem beliebigen Verbraucher der Stärkemilch liegt ein Signal über die Grösse des augenblicklichen Materialflusses, zu der die Stärke in Form von Stärkemilch zudosiert werden soll, vor. Dieser Istwert wird einem Verhältnis-Sollwertwandler 57 zugeführt. Dieser Wandler 57 liefert dem Regler 49 für das Regelgetriebe der Dosierschnecke 3 und dem Regler 51 für das Regelgetriebe der Pumpe 11 die entsprechenden Sollwertsignale. Es müssen nicht unbedingt Regler eingesetzt werden. Es können auch einfachere Systeme ausreichend sein, da bei den beiden Getriebeverstellungen auch schon eine Sollwerteinstellung ausreichend sein kann.

Bei Verwendung einer Konzentrationsmessung in der Förderleitung von der Pumpe 11 zum Verbraucher kann sich der Regler 49 für das Regelgetriebe der Dosierschnecke 3 beeinflussen lassen. Der Regler 50 für das Regelgetriebe der Pumpe 11 würde dann primär vom Istwert des Verbrauchers beeinflusst werden.

Bei einer zusätzlichen Durchflussmenge in der Leitung von der Pumpe 11 zum Verbraucher kann dann ein voll geregeltes System aufgebaut werden. In diesem Fall entspricht der Istwert vom Verbraucher nach Einstellung von einem bestimmten Signalverhältnis im Sollwertwandler den beiden Solwerten für den Regler. Die entsprechenden Istwerte werden von dem Konzentrationsmessgerät und dem Durchflussmessgerät geliefert. Die Wasserdosierung ist nur von der Pumpeneinstellung abhängig. Über den Niveautransmitter 54 wird im Homogenisierungsgefäss 9 ein konstanter Flüssigkeitsspiegel eingestellt, d.h. der Wasserzulauf entspricht der augenblicklichen Pumpenfördermenge. Es kann aber ganz allgemein auch ein Aufbau verwendet werden, bei dem nur auf einen festen Durchsatzwert mit konstanter Konzentration über längere Zeiträume gefahren wird. Nur bei Sortenänderungen am Verbraucher wird dann eine geänderte Einstellung der Stärkedosierung von Hand notwendig. In den meisten Fällen wird es überhaupt nicht erforderlich sein, auch die pumpeneinstellung zu verändern, da der Wasseranteil der Stärkemilch beim Verbraucher eine untergeordnete Rolle spielt. Dadurch können die Regelgetriebe für die Dosierschnecke und die Pumpe gegen Stellgetriebe ausgetauscht werden.

Nur der Regler für die Wasserdosierung ist auch weiterhin erforderlich.

Es wäre auch günstig, eine Konzentrationsmessung in der Leitung von der Pumpe zum Verbraucher vorzunehmen. Im einfachsten Falle können hier Alarme betätigt werden, die nach Überschreitung oder Unterschreitung des Sollwertes betätigt werden. Andernfalls könnte auch der Antrieb für die Dosierschnecke wieder als Regelgetriebe ausgeführt werden. Abweichungen vom Sollwert der Stärkemilchkonzentration können dann über 'einen Regler abgefangen werden.

Von besonderer Bedeutung ist, dass durch den beschriebenen Aufbau eine kleinbauende Anlage mit geringem Energieverbrauch hergestellt werden kann.

## Patentansprüche

1. Anlage zur kontinuierlichen Stärkemilchaufbereitung mit einer Dosiereinrichtung (2) für die Stärkezufuhr, deren Ausgang (4) in einen Einlauftrichter (5) mündet, dessen Trichterinnenwand (6) mittels Wasser aus einer Zuführleitung (14) bespülbar ist, dadurch gekennzeichnet, daß eine Wassermischeinheit (10) zum dosierbaren Einspeisen von Wasser in ein Fallrohr (8) vorgesehen ist und daß der Auslauf (7) des Einlauftrichters (5) über das Fallrohr (8) mit einem tiefer als der Auslauf (7) liegenden Homogenisierungsgefäß (9) verbunden ist, in dem eine Zwangsführung (32) für das strömende Medium durch die Rührerzone über einen sich zur Rührerzone verjüngenden Konus (33; 38; 46) angeordnet ist, wobei im Fallrohr (8) eine Sogwirkung vom Auslauf (7) des Einlauftrichters (5) bis zum Ausgang (12) im Homogenisierungsgefäß (9) erzeugt wird.

2. Anlage nach Anspruch 1, dadurch gekennzeichnet, dass zwischen dem Ausgang (I2) des Homogenisierungsgefässes (9) und dem Verbraucher eine Pumpe (II) eingeschaltet ist.

3. Anlage nach Anspruch 1, dadurch gekennzeichnet, dass die Dosiereinrichtung (2) eine Dosierschnecke (3) ist, deren Aufgabeende in Verbindung mit einem Vorratsbehälter (I) für Stärke steht, und dass der Ausgang (4) der Dosierschnecke (3) ein sich senkrecht nach unten erstreckendes Rohr ist, welches in den Einlauftrichter mündet.

4. Anlage nach einem der Ansprüche 1 bis 3, dadurch gekennzeichnet, dass der Einlauftrichter (5) am oberen Ende einen Doppelmantel (13) aufweist, in den die Wasserzufuhrleitung (14) mündet und dessen Innenwand (15) wasserdurchlässig ist.

5. Anlage nach Anspruch 4, dadurch gekennzeichnet, dass die Innenwand (15) des Doppelmantels (13) aus Sintermetall oder aus porösem Kunststoff-, Keramik- oder Glasmaterial oder aus einem mehrlagigen Siebgewebe (16) aus korrosionsbeständigem, verschleissfestem Material, wie Kunststoff oder Edelstahl, besteht.

6. Anlage nach einem der Ansprüche 1 bis 5, dadurch gekennzeichnet, dass die Wasserzufuhrleitung (14) tangential zu der Trichterinnen wand (6) in den Einlauftrichter (5) mündet.

7. Anlage nach einem der Ansprüche 1 bis 3, dadurch gekennzeichnet, dass am oberen Ende des Einlauftrichters (5) mit der Wasserzufuhrleitung (14) verbundene Düsen (18) oder düsenförmige Rohre zur Berieselung der Trichterinnenwand (6) vorgesehen sind und dass die Düsen (18) mit einer Ringleitung (19) verbunden undan dieser auf einem Teilkreis gleichmässig verteilt sind.

8. Anlage nach einem der Ansprüche 1 bis 7, dadurch gekennzeichnet, dass die Wassermischeinheit (10) nach dem prinzip der Wasserstrahlpumpe arbeitet und dass der Auslauf (7) des Einlauftrichters (5) einen Ansatz (20) aufweist, dessen unterer Rand (21) abgeschrägt ist und der sich in eine im Fallrohr (8) ausgebildete Ringkammer (22) hineinerstreckt, in die eine Wasserzufuhrleitung (23) mündet und dass der abgeschrägte untere Rand (21) des Ansatzes (20) mit einer abgeschragten Ringwand (24) des Fallrohres (8) einen Ringspalt (25) bildet.

9. Anlage nach einem der Ansprüche 1 bis 7, dadurch gekennzeichnet, dass der Auslauf (7) des Einlauftrichters (5) einen Ansatz (26) aufweist, der sich in eine im Fallrohr (8) ausgebildete Ringkammer (27) hineinerstreckt, in die eine Wasserzufuhrleitung (23) mündet, und dass dieser Ansatz (26) Bohrungen (28) aufweist, welche die Ringkammer (27) mit dem Fallrohr (8) verbinden.

10. Anlage nach einem der vorhergehenden Ansprüche, dadurch gekennzeichnet, daß der Konus (33) beidseitig offen ist, wobei sein Rand (34) größeren Durchmessers gegen die Innenwand (35) des Homogenisierungsgefässes stromab vom Einlauf anliegt, und daß sich von der kleinen Öffnung (36) des Konus (33) ein Rohransatz (37) erstreckt.

11. Anlage nach einem der vorhergehenden Ansprüche, dadurch gekennzeichnet, daß die Zwangsführung (32) ein Doppelkonus (38, 39) mit Zwischenrohr (40) ist, dessen Ränder (41, 42) großen

Durchmessers an der Innenwand (35) des Homogenisierungsgefässes (9) anliegen und Einström- und Ausströmöffnung der Zwangsführung bilden.

12. Anlage nach einem der vorhergehenden Ansprüche, dadurch gekennzeichnet, daß die Zwangsführung (32) einen Rohrmantel (44) aufweist, der mit der Innenwand (35) des Homogenisierungsgefässes (9) einen Ringspalt (45) bildet und in dessen Innerem ein Doppelkonus (46,47) mit Zwischenrohr (48) angeordnet ist, deren Ränder größeren Durchmessers mit den Rohrmantelrändern verbunden sind.

13., Anlage nach einem der Ansprüche 9 bis 12, dadurch gekennzeichnet, daß der Rührer (31) stromab der kleineren Konusöffnung oder in dieser oder stromab vom Rohransatz (37) oder Zwischenrohr (40; 48) oder in diesem liegt.

**Revendications**

1. Installation pour préparer en continu du lait d'amidon comprenant un dispositif de dosage (2) pour l'alimentation en amidon, dont la sortie (4) débouche dans une trémie d'entrée (5), dont la paroi interne (6) peut être rincée par de l'eau provenant d'une conduite d'arrivée (14), caractérisée en ce qu'une unité de mélange d'eau (10) est prévue pour alimenter, de façon à doser l'eau, un tube de chute (8) et que la sortie (7) de la trémie d'entrée (5) est reliée par l'intermediaire du tube de chute (8) à un récipient d'homogénéisation (9) situé plus bas que la sortie (7), dans lequel se trouve un dispositif de guidage forcé (32) du milieu circulant à travers la zone de l'agitateur par l'intermédiaire d'un cône (33; 38; 46) allant en s'effilant en direction de la zone de l'agitateur, un effet de succion étant produit depuis la sortie (7) de la trémie d'entrée (5) jusqu'à la sortie (12) du récipient d'homogénéisation (9).

2. Installation selon la revendication 1, caractérisée en ce qu'entre la sortie (12) du récipient d'homogénéisation (9) et l'usager est intercalée une pompe (II).

3. Installation selon la revendication 1, caractérisée en ce que le dispositif de dosage (2) est une vis transporteuse de dosage (3) dont l'extrémité de chargement est reliée à un réservoir (I) pour l'amidon, et en ce que la sortie (4) de la vis de dosage (3) est un tube s'étendant verticalement vers le bas et débouchant dans la trémie d'entrée.

4. Installation selon l'une des revendications 1 à 3, caractérisée en ce que la trémie d'entrée (5) comporte à l'extrémité supérieure une double enveloppe (13) dans laquelle débouche la conduite d'arrivée d'eau (14) et dont la paroi interne (15) peut être traversée par l'eau.

5. Installation selon la revendication 4, caractérisée en ce que la paroi interne (15) de la double enveloppe (13) est constituée par du métal fritté ou par une matière poreuse en matière plastique, céramique ou vitreuse ou bien par un tissu tamiseur en plusieurs couches (16) en une matière résistant à la corrosion ainsi qu'à l'usure, telle qu'une matière plastique ou de l'acier spécial.

6. Installation selon l'une des revendications 1 à 5, caractérisée en ce que la conduite d'arrivée d'eau (14) débouche dans la trémie d'entrée (5) tangentiellement par rapport à la paroi interne (6) de la trémie.

7. Installation selon l'une des revendications 1 à 3, caractérisée en ce que, à l'extrémité supérieure de la trémie d'entrée (5), on prévoit des buses (18) ou des tubes en forme de buse reliés à la conduite d'arrivée d'eau (14) pour arroser la paroi interne (6) de la trémie, et en ce que les buses (18) sont connectées à une conduite annulaire (19) et réparties sur celle-ci régulièrement sur une portion de cercle.

8. Installation selon l'une des revendications 1 à 7, caractérisée en ce que l'unité de mélange d'eau (10) travaille d'après le principe de la pompe à jet d'eau, en ce que la sortie (7) de la trémie d'entrée (5) présente un appendice (20), dont le bord inférieur (21) est oblique, qui s'étend dans une chambre annulaire (22) formée dans le tube de chute (8) et dans laquelle débouche une conduite d'arrivée d'eau (23), et en ce que le bord inférieur oblique (21) de l'appendice (20) forme un intervalle annulaire (25) avec la paroi annulaire (24) oblique du tube de chute (8).

9. Installation selon l'une des revendications 1 à 7, caractérisée en ce que la sortie (7) de la trémie d'entrée (5) présente un appendice (26) qui s'étend dans une chambre annulaire (27) formée dans le tube de chute (8) et dans laquelle débouche une conduite d'arrivée d'eau (23), et en ce que cet appendice (26) présente des orifices (28) qui relient la chambre annulaire (27) au tube de chute (8).

10. Installation selon l'une des revendications précédentes, caractérisée en ce que le cône (33) est ouvert des deux côtés, son bord (34) de plus grand diamètre reposant contre la paroi interne (35) du récipient d'homogénéisation en aval de l'entrée, et en ce qu'un appendice tubulaire (37) s'étend depuis le petit orifice (36) du cône (33).

11. Installation selon l'une des revendications précédentes, caractérisée en ce que le dispositif de guidage forcé (32) est un cône double (38, 39) avec tube intermédiaire (40) dont les bords (41, 42) de grand diamètre reposent sur la paroi interne (35) du récipient d'homogénéisation (9) et forment un orifice de circulation interne et externe du dispositif de guidage forcé.

12. Installation selon l'une des revendications précédentes, caractérisée en ce que le dispositif de guidage forcé (32) présente une enveloppe tubulaire (44) qui forme avec la paroi interne (35) du récipient d'homgénéisation (9) un espace annulaire (45) et à l'intérieur de laquelle se trouve un cône double (46, 47) avec tube intermédiaire (48) dont les bords de plus grand diamètre sont reliés aux bords de l'enveloppe tubulaire.

13. Installation selon l'une des revendications 9 à 12, caractérisée en ce que l'agitateur (31) est situé en aval de l'orifice plus petit du cône, ou dans celui-ci, ou bien en aval de l'appendice tubulaire (37) ou du tube intermédiaire (40, 48), ou dans celui-ci.

**Claims**

1. Installation for continuous starch milk preparation having a metering device (2) for the starch supply, the outlet (4) of which discharges into an inflow funnel (5), whose inside wall (6) can be washed out by water from a supply line (14) characterized in that a water mixing unit (10) for the metered feeding of water into a fall respectively outlet pipe (8) is provided and that the outflow (7) of the inlet funnel (5) by means of the fall or outlet pipe (8) is connected to a homogenisation vessel (9) arranged at a level lower than the outflow (7), in which a forced feed (32) of the flowing medium is arranged through the agitator zone by means of a cone (33; 38; 46), tapering towards the agitator zone, in the fall or outlet pipe (8) a suction effect from the outflow (7) of the inflow funnel (5) till the outlet (12) in the homogenisation vessel (9) being brought about.

2. Installation according to claim 1, characterized in that between the outlet (12) of the homogenisation vessel (9) and the receiver a pump (11) is connected.

3. Installation according to claim 1, characterized in that the metering, device (2) is a metering screw (3), whose feed end is connected to a starch storage container (1), and that the outlet (4) of the metering screw (3) is a vertical pipe extending downwards, which feeds into the inflow funnel.

4. Installation according to one of claims 1 to 3, characterized in that the inflow funnel (5) has a double casing on the upper end, into which the water supply line (14) feeds and whose inner wall (15) is pervious to water.

5. Installation according to claim 4, characterized in that the inner wall (15) of the double. casing (13) consists of sintered metal or of porous plastics ceramic or glass material, or of a multilayered sieve fabric (16) of corrosion resistant and wear resistant material such as a plastics or high grade steel.

6. Installation according to one of claims 1 to 5, characterized in that the water supply line (14) feeds into the inflow funnel (5) tangentially to the funnel inner wall (6).

7. Installation according to one of claims 1 to 3, characterized in that on the upper end of the inflow funnel (5), nozzles (18) or nozzle shaped pipes are connected to the water supply line (14) for spraying the funnel inner wall (6), and that the nozzles (18) are connected to a ring pipe (19) and are equally distributed on this in a pitch circle.

8. Installation according to one of claims 1 to 7, characterized in that the water mixing unit (10) works according to the principle of the water jet pump and that the outflow (7) of the inflow funnel (5) has an attachment (20) whose lower edge is chamfered and which extends into an annular chamber (22) formed in the outlet pipe (8) into which a water supply line (23) feeds, and that the chamfered lower edge (21) of the attachment (20) forms a ring slot (25) with a chamfered ring wall (24) of the outlet pipe (8).

9. Installation according to one of claims 1 to 7, characterized in that the outflow (7) of the inflow funnel (5) has an attachment (26), which extends into an annular chamber (27) formed in the outlet pipe (8), into which a water supply line (23) feeds, and that this attachment (26) has bore-holes (28) which connect the annular chamber (27) with the outlet pipe (8).

10. Installation according to one of the preceeding claims characterised in that the cone (33) is open at both ends, whose edge (34) with the larger diameter lies against the inner wall (35) of the homogenisation vessel downstream of the inflow and that from the smaller opening (36) of the cone (33) a pipe attachment (37) extends.

11. Installation according to one of the preceeding claims, characterised in that the forced feed (32) is a double cone (38, 39) with an intermediate pipe (40), whose edges (41, 42) with the larger diameter lie against the inner wall (35) of the homogenisation vessel (9) and form forced feed inflow and outflow-openings.

12. Installation according to one of the preceeding claims, characterised in that the forced feed (32) has a pipe casing (44), which forms a ring gap (45) with the inner wall (35) of the homogenisation vessel (9) and in whose interior is arranged a double cone (46, 47) with intermediate pipe (48), whose edges with the larger diameter are connected to the pipe casing edges.

13. Installation according to one of claims 9 to 12 characterised in that the agitator (31) lies downstream of the smaller cone opening or in this opening or downstream of the pipe attachment (37) or intermediate pipe (40, 48) or in this.

**FIG. 1**

Signal :
Istwert vom
Verbraucher

Wasser

Stärkemilch
zum
Verbraucher

13

15

14

6

5

7

20

21

FIG. 2

13

14

FIG. 3

2

FIG. 4

FIG. 5

FIG. 6

3

FIG. 7

FIG. 8

FIG. 9

FIG.10

FIG.11

FIG.12